(19) Europäisches Patentamt
European Patent Office
Office européen des brevets

(11) **EP 2 863 688 B1**

(12) **EUROPEAN PATENT SPECIFICATION**

(45) Date of publication and mention
of the grant of the patent:
**21.06.2017 Bulletin 2017/25**

(21) Application number: **13306426.1**

(22) Date of filing: **17.10.2013**

(51) Int Cl.:
*H04W 52/10* (2009.01)     *H04W 52/22* (2009.01)
*H04W 52/36* (2009.01)     *H04W 92/20* (2009.01)
*H04W 28/18* (2009.01)     *H04W 52/40* (2009.01)
*H04W 52/24* (2009.01)     *H04W 52/14* (2009.01)
*H04W 52/26* (2009.01)

(54) **Power control concept for a cellular communication system**

Konzept für Sendeleistungseinstellung in einem zellularen Kommunikationsystem

Concept de commande de puissance pour un système de communication cellulaire

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**22.04.2015 Bulletin 2015/17**

(73) Proprietor: **ALCATEL LUCENT
92100 Boulogne-Billancourt (FR)**

(72) Inventor: **Schreiber, Gerhard
70435 Stuttgart (DE)**

(74) Representative: **Wetzel, Emmanuelle et al
Alcatel-Lucent
Intellectual Property Business Group
70430 Stuttgart (DE)**

(56) References cited:
**WO-A1-2012/071727     US-A1- 2011 136 448**

• HUAWEI ET AL: "On the Design of Power Control
for UL MIMO", 3GPP DRAFT; R1-122694 ON THE
DESIGN OF POWER CONTROL FOR UL MIMO,
3RD GENERATION PARTNERSHIP PROJECT
(3GPP), MOBILE COMPETENCE CENTRE ; 650,
ROUTE DES LUCIOLES ; F-06921
SOPHIA-ANTIPOLIS CEDEX ; FRANCE, vol. RAN
WG1, no. Prague, Czech Republic; 20120521 -
20120525, 12 May 2012 (2012-05-12),
XP050600879, [retrieved on 2012-05-12]

**EP 2 863 688 B1**

**Description**

Embodiments generally relate to communication systems and, in particular, to power control methods and apparatuses for cellular communication systems.

Background

This section introduces aspects that may be helpful in facilitating a better understanding of embodiments of the present invention. Accordingly, the statements of this section are to be read in this light and are not to be understood as admissions about what is in the prior art or what is not in the prior art.

Many cellular communication systems employ power control. Power control may be subdivided into downlink (direction from a base station to associated mobile terminals) power control and uplink (direction from mobile terminals to their serving base station) power control. Uplink power control, for example, is a key radio resource management function. Uplink system performance depends on proper operation of its respective power control. It determines on one hand the signal level at the receiver (base station) and on the other hand how much interference a mobile terminal causes in neighbor cell.

Examples of conventional power control concepts are provided in US 2011/136448 A1 or WO 2012/071727 A1.

Summary

Some simplifications may be made in the following summary, which is intended to highlight and introduce some aspects of the various example embodiments, but such simplifications are not intended to limit the scope of embodiments. Detailed descriptions of one or more preferred exemplary embodiments adequate to allow those of ordinary skill in the art to make and use the inventive concepts will follow in later sections.

According to a first aspect, embodiments provide a power control method for a cellular communication system. The method includes determining a first performance of a first cell. An uplink power control parameter for the first cell is varied to maximize the first performance. Further, the method includes determining a second performance of one or more cells adjacent to the first cell. A target interference level is varied to maximize the second performance.

According to yet a further aspect, embodiments provide a power control apparatus for a cellular communication system. The apparatus includes a processor to determine a first performance of a first cell. The apparatus includes a processor to vary an uplink power control parameter for the first cell to maximize the first performance. The apparatus includes a processor to determine a second performance of one or more cells adjacent to the first cell. The apparatus includes a processor to vary a target interference level to maximize the second performance.

Some embodiments comprise a digital control circuit installed within the power control apparatus. Such a digital control circuit, e.g. a Digital Signal Processor (DSP), a Field-Programmable Gate Array (FPGA), an Application-Specific Integrated Circuit (ASIC), or a general purpose processor, needs to be programmed accordingly. Hence, yet further embodiments also provide a computer program having a program code for performing embodiments of the power control method, when the computer program is executed on a programmable hardware device.

Brief description of the Figures

Some embodiments of apparatuses and/or methods will be described in the following by way of example only, and with reference to the accompanying figures, in which

Fig. 1a    illustrates a measured Interference-over-Thermal (IoT) figure as function of a target IoT for a reference power control implementation;
Fig. 1b    shows an IoT Cumulative Distribution Function (CDF) curve for an example of 6 dB target IoT targeted with the reference power control implementation;
Fig. 1c    shows the corresponding receive-power spectral density distribution;
Fig. 2a    shows a cell-edge user Spectral Efficiency (SPE) for the reference power control implementation with a maximum at about 6dB IoT;
Fig. 2b    shows the cell spectral efficiency as function of the measured IoT;
Fig. 2c    illustrates a joint Figure Of Merit (FOM);
Fig. 3    schematically illustrates a cellular communication system;
Fig. 4    shows a flow-chart of an iterative power control method according to an embodiment;
Fig. 5    illustrates a selfish control of own-cell performance;
Fig. 6    illustrates an unselfish control of neighbor cell performance;
Fig. 7    shows a temporal cell throughput evolution;

Fig. 8     illustrates an evolution of the cell's cell-edge mobile throughput;

Fig. 9     shows a temporal evolution of each cell's performance; Self Optimizing/Organizing Network Power Control (SON PC) is switched on 24 seconds after start

Fig. 10     shows the temporal evolution of each cell's worst mobile performance; SON PC is switched on 24 seconds after start;

Fig. 11     shows a targeted IoT as function of time; SON PC is switched on 24 seconds after start;

Fig. 12     shows a temporal evolution of a measured IoT; SON PC is switched on 24 seconds after start;

Fig. 13     shows an evolution of a target power-spectral density; SON PC is switched on 24 seconds after start;

Fig. 14     shows a temporal evolution of multiple cells performance; SON PC is switched on from start

Fig. 15     shows a temporal evolution of multiple cells worst mobile performance; SON PC is switched on from start

Fig. 16     illustrates a comparison of a measured IOT distribution; and

Fig. 17     illustrates a comparison of a target receive power spectral density distribution.

Description of Embodiments

Various example embodiments will now be described more fully with reference to the accompanying drawings in which some example embodiments are illustrated. In the figures, the thicknesses of lines, layers and/or regions may be exaggerated for clarity.

Accordingly, while example embodiments are capable of various modifications and alternative forms, embodiments thereof are shown by way of example in the figures and will herein be described in detail. It should be understood, however, that there is no intent to limit example embodiments to the particular forms disclosed, but on the contrary, example embodiments are to cover all modifications, equivalents, and alternatives falling within the scope of the invention. Like numbers refer to like or similar elements throughout the description of the figures.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (e.g., "between" versus "directly between," "adjacent" versus "directly adjacent," etc.).

The terminology used herein is for the purpose of describing particular embodiments only and is not intended to be limiting of example embodiments. As used herein, the singular forms "a," "an" and "the" are intended to include the plural forms as well, unless the context clearly indicates otherwise. It will be further understood that the terms "comprises," "comprising," "includes" and/or "including," when used herein, specify the presence of stated features, integers, steps, operations, elements and/or components, but do not preclude the presence or addition of one or more other features, integers, steps, operations, elements, components and/or groups thereof.

Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

Uplink system performance strongly depends on proper operation of its respective power control, which plays an important role for the uplink of cellular networks, such as Long Term Evolution (LTE), for example. Uplink power control may determine on the one hand a signal level at a base station receiver and on the other hand how much interference one or more mobiles cause in neighbor cells. The LTE standard has defined a combination of so-called open loop and closed loop power control. The open loop part of the scheme may also be called Fractional Power Control (FPC) because it allows User Equipments (UE) to partially compensate for path-loss between a base station and the UE. FPC may be characterized by two main parameters: a value $P_0$ indicative of a target received power and a compensation factor $\alpha$.

Power control has been a major radio feature of 3rd Generation (3G) Wideband Code Division Multiple Access (WCDMA) cellular networks. In such systems, in particular in the uplink, fast power control follows variations of a wireless channel (path-loss, shadowing and fast fading) in order to limit as much as possible intra-cell interference, i.e., interference between users associated with the same cell. With High-Speed Packet Access (HSPA), fast power control is abandoned on the downlink (HSDPA) and channel variations may rather be taken into account by fast link adaptation and scheduling. This paradigm change is facilitated by the multiple access scheme which is a mixture of Code Division Multiple Access (CDMA) and Time Division Multiple Access (TDMA). Fast power control is however still present on the uplink (HSUPA).

Contrary to previous 3rd Generation Partnership Project (3GPP) standards, LTE abandons fast power control both on the downlink and on the uplink, as the resources allocated to different users of a given cell are orthogonal. With Orthogonal Frequency-Division Multiple Access (OFDMA) on the downlink or with and/or Single-Carrier Frequency-Division Multiple Access (SC-FDMA) on the uplink, there is no or only limited intra-cell interference. As a consequence, power control in LTE is slow, i.e., it follows the variations of the path-loss and of the shadowing, and aims at limiting or controlling inter-cell interference, in particular for cell edge users. As in HSDPA, fast variations of the radio channels are considered by a fast link adaptation scheme and a scheduler. On the uplink, power control is responsible for setting a UE's transmitted power per SC-FDMA symbol. One of its goals is to reduce the power emitted by UEs that are important sources of interference for neighbor cells, i.e., UEs at the cell edge. As mentioned before, it comprises two parts: an open loop scheme based on UE own measurements; and a closed loop scheme based on commands sent by the base station or eNodeB, as it may be called according to 3GPP terminology.

On the Physical Uplink Shared Channel (PUSCH), for example, a UE's transmitted power P can be expressed in dBm based on

$$P = \min\{P_{\max}, 10\log_{10}(M) + P_0 + \alpha * PL\}, \tag{1}$$

where $P_{\max}$ is the maximum transmit power of the UE, $M$ is the number of Physical Resource Blocks (PRB) allocated to the UE, $P_0$ is a target received power per PRB at the serving cell's base station, $\alpha$ is called the compensation factor, and $PL$ is an estimate of the path-loss between the UE and its serving base station. Equation (1) may further include a corrective factor depending on a transport format, and a further user specific corrective component under control of the serving base station via standardized power control commands. The latter mechanism represents the closed-loop component of uplink power control. Typically, changes in the power setting due to closed-loop corrections occur more frequent than changes in open-loop power control parameter settings. Therefore, it is often said that the closed-loop power control is fast relative to the open-loop control component. The terminus "fast" is relative and depends on the vendor specific implementation of the power control mechanism.

The UE's power control parameter setting with respect to $P_0$ and/or $\alpha$ may be determined by its serving cell. Thereby the serving cell may be determined by the UE via so-called downlink Reference Signal Received Power (RSRP) measurements. The RSRP measurement of the signal strength of an LTE cell may help to rank between the different cells as input for handover and cell reselection decisions, for example. In some implementations the RSRP is the average of the power of all physical resource elements which carry cell-specific reference signals over the entire bandwidth. It may therefore be measured in the OFDM symbols carrying reference symbols.

In a reference implementation of a power control operation each cell of a wireless network may periodically send an overload indicator (for example. 1 bit) to its neighbor cells. The overload indicator may be set to true if an average Interference-over-Thermal (IoT) figure is larger than a target value, otherwise it may be set to false. Each cell may receive overload indicators from its neighbor cells. Further, each cell may periodically determine whether or not it may be responsible for an overload situation in a neighbor cell. Depending on the result the cell may decrease or increase its target receive-power spectral density for its served mobiles, i.e., the $P_0$ parameter may be adjusted by $\pm$1dB per adaptation event, for example.

For simulations which have been performed in order to compare a reference power control implementation with example embodiments of the present invention fast closed loop power control has been neglected. Further, no Modulation and Coding Scheme (MCS) correction has been applied. Changes in power control settings are performed slowly, for example in the range of tens of seconds or minutes, and Physical Uplink Control Channel (PUCCH) has not been taken into account. For performance comparison the fractional path loss compensation factor $\alpha$ has been set to 0.8, for example. Needless to say that other values for $\alpha$ are also possible. For example, $P_0$ may be the same for all mobiles controlled by the same serving cell, which may change the parameter in step sizes of $\pm$1dB. Other step sizes are also possible, of course. A UE may periodically measure the downlink path loss. Further, a UE may employ a layer 3 filter to average the path loss in time. Thereby, the layer 3 filter uses the last three measured downlink path loss values for calculating an average value. The last three measured downlink path loss values may be weighted differently. For example, a most recent value may get a higher weight than a previously measured value.

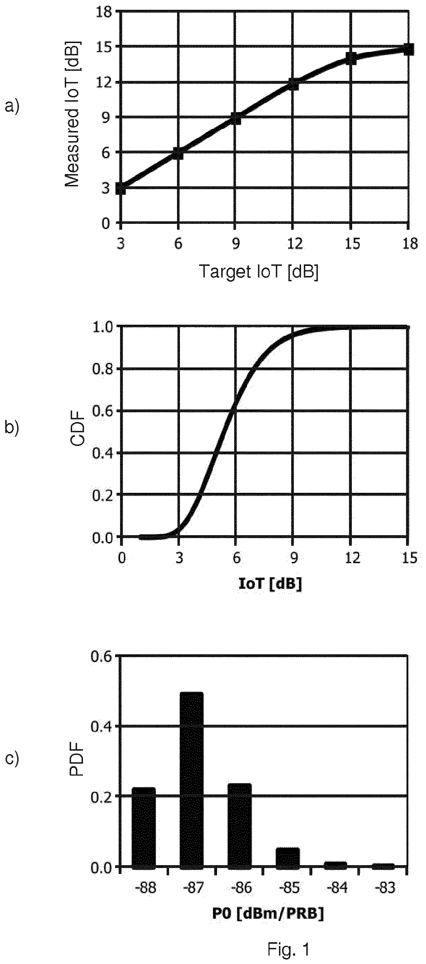

Fig. 1a illustrates a measured Interference-over-Thermal (IoT) figure as function of a target IoT for the reference power control implementation. In wireless communication systems, the Interference-over-Thermal (IoT) or Rise-over-Thermal (ROT) indicates the ratio between the total interference received at a base station and the thermal noise. IoT may hence be regarded as an interference level. The target IoT may be a fixed constant for all cells. It may be observed from Fig. 1a that the desired (average) IoT may almost always be achieved by the reference power control implementation. Only high IoT values cannot be achieved because of the UE's power limitation.

Fig. 1b shows an IoT Cumulative Distribution Function (CDF) curve for an example of 6 dB target IoT targeted with the reference power control implementation. The depicted CDF describes the probability that a real-valued random variable X IoT in this case) with a given probability distribution will be found at a value less than or equal to x. From the IoT CDF curve of Fig. 1b it can be seen that a large fraction of measured cell IoT values is indeed close to the targeted value. Fig. 1c shows the corresponding receive-power spectral density distribution, i.e. $P_0$ [dBm/PRB]. The $P_0$ values

are located around -87 dBm/PRB in this example.

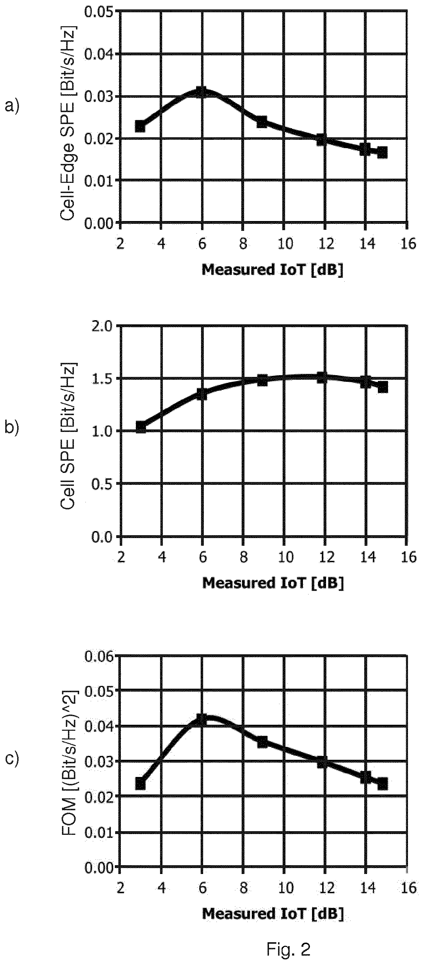

Fig. 2a shows a cell-edge user SPectral Efficiency (SPE) for the reference power control implementation with a maximum at about 6dB IoT in this example. Fig. 2b shows the cell spectral efficiency as function of the measured IoT. The maximum in this example is at about 12dB IoT. The cell-edge user spectral efficiency and/or the cell spectral efficiency may be regarded as different measures of performances for a radio cell. In some implementations a joint Figure Of Merit (FOM) may be defined as the product of the cell-edge user SPE (see Fig. 2a) and the cell SPE (see Fig. 2b). Such a definition of a quality or performance indicator may allow finding a good compromise between the cell-edge and overall cell performance. In the example case the optimum IoT would be about 6 dB, see Fig. 2c.

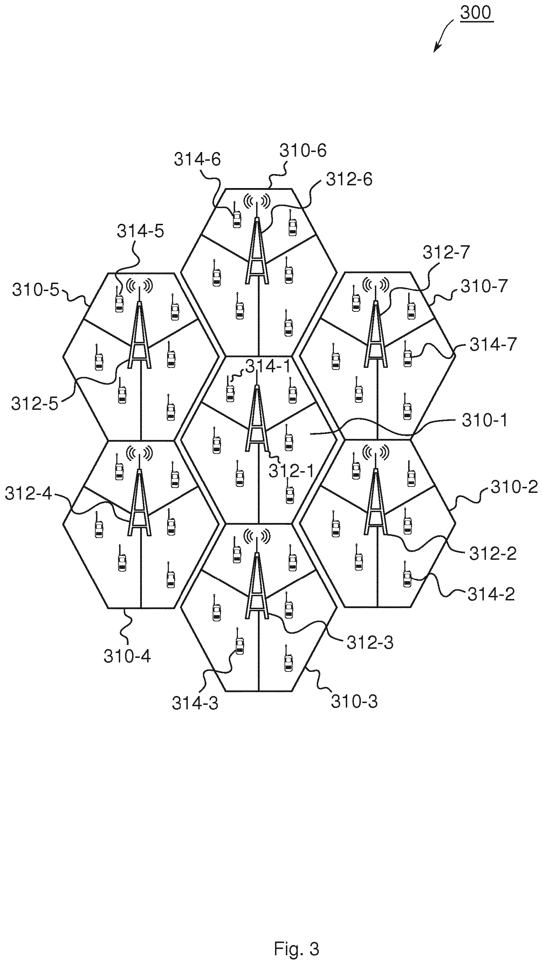

The principles of power control implementations according to embodiments will now be explained referring to Figures 3 to 17. Although example embodiments relate to LTE systems, it will be apparent to the skilled person that other implementations may also relate to other cellular communication systems employing the same of similar power control mechanisms.

Fig. 3 schematically illustrates a cellular communication system 300, such as an LTE system, for example. The cellular communication system 300 comprises a plurality of radio cells 310-1 to 310-7. Thereby a radio cell 310 may be further subdivided into a plurality of cell sectors, for example. A radio cell (short: cell) and a sector may be distinguished from other cells and sectors by means of a unique cell identifier (cell ID), respectively. Hence, a cell has a unique cell ID. Also a sector has a unique cell-ID. A sector may therefore as well be understood as a unique cell.

The cells 310-1 to 310-7 are served by base stations 312-1 to 312-7, respectively. The base stations 312-1 to 312-7 have associated therewith a plurality of UEs 314-1 to 314-7, respectively. In downlink direction the base stations 312-1 to 312-7 transmit downlink signals to their associated UEs 314-1 to 314-7. In uplink, the UEs 314-1 to 314-7 transmit uplink signals to their serving base stations 312-1 to 312-7. If the uplink transmission is not coordinated appropriately by power control concepts prohibitive inter-cell interference is possible.

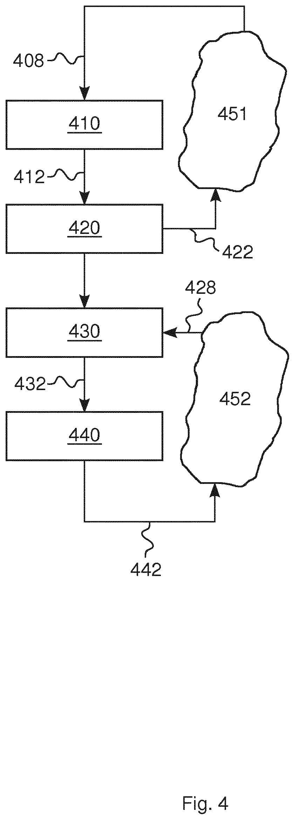

For this purpose, some embodiments relate to an iterative power control method 400 for a cellular communication system 300. As indicated in Fig. 4, the method 400 or an iteration thereof comprises an act 410 of determining a first performance 412 of a first cell or an indicator thereof. This may be done based on one or more measured performance quantities 408. For example, let us consider cell 310-1 as the first cell. In an act 420 an uplink power control parameter 422 is varied for the first cell 310-1 to maximize the first performance 412. In a further act 430 a second performance 432 of one or more cells 310-2 to 310-7 adjacent to the first cell 310-1 or an indicator thereof is determined. This may be done based on one or more measured performance quantities 428. In act 440 a target interference level 442 is varied to maximize the second performance 432.

Method 400 may be carried out by a power control apparatus for a cellular communication system. Correspondingly, the apparatus comprises a processor to determine the first performance 412 (or an indicator thereof) of the first cell 310-1. Said processor or another processor is further operable to vary the uplink power control parameter 422 for the first cell 310-1 to maximize the first performance 412. The processor or another processor is further operable to determine the second performance 432 (or an indicator thereof) of cells 310-2 to 310-7 adjacent to the first cell 310-1. Said processor or another processor is further operable to vary the target interference level 442 to maximize the second performance 432.

In Fig. 4, reference numerals 451, 452 represent reactions of the cellular communication system 300 or parts thereof in response to the variations of the uplink power control parameter 422 and/or the target interference level 442. For example, upon varying the uplink power control parameter 422 for the first cell 310-1, the uplink power (the UEs transmit power) in the first cell 310-1 may vary as well. Likewise, varying the target interference level 442 for the cellular communication system 300 or parts thereof may lead to different experienced uplink powers and interference levels in the cells 310-1 to 310-7. In return, updated performance quantities 408 of the first cell 310-1 and/or updated performance quantities 428 of the cells 310-2 to 310-7 adjacent to the first cell 310-1 may be measured in a subsequent iteration of method 400.

As there are various possibilities to define the performance quantities 408 of the first cell 310-1, the skilled person will understand that in general there are many possibilities to define the corresponding first performance 412. In some embodiments the performance quantities 408 of the first cell 310-1 may be subdivided into a performance of a cell-edge or worst user (UE) of the first cell 310-1 and an average performance of the first cell 310-1. Thereby, actual achieved data rates and/or spectral efficiency may be regarded as a measure of performance in some embodiments. In an example embodiment, the act 410 of determining the first performance 412 in a current iteration of the method 400 includes determining a first value *CE.* Said first value *CE* may be indicative of a data throughput of a cell-edge user (UE) associated with the first cell 310-1. In some embodiments this may be a worst data throughput of a worst user in the first cell 310-1. Thereby the data throughput may be determined or measured since a previous iteration of the method 400. Further, determining 410 the first performance 412 in a current iteration of the method 400 may include determining a second value *C.* Said second value *C* may be indicative of the first cell's overall or average data throughput since the previous iteration. Having determined the first value *CE* and the second value *C,* the first performance 412 may be determined based on the first value *CE* and the second value *C.*

The first performance 412 may also be expressed in terms of a first figure of merit $FOM_1$. For example, according to some embodiments the first performance 412 may be determined corresponding to

$$FOM_1 = \sqrt{CE \times C}\ with\ CE \times C > 0, \qquad (2)$$

wherein $CE$ denotes the first cell's cell-edge or worst user's data throughput measured since the previous iteration, and wherein $C$ denotes first cell's data throughput measured since the previous iteration.

In other implementations the first performance 412 or first figure of merit may also be determined corresponding to

$$FOM_1' = CE^a * C\ with\ a \geq 1. \qquad (2')$$

This slightly modified figure of merit $FOM_1'$ overemphasizes the cell-edge (CE) against the cell (C) performance.

In some embodiments the uplink power control parameter 422 to be varied or changed may be a value indicative of a target received power at the first cell's base station 312-1. For example, the uplink power control parameter 422 may be the value $P_0$ of equation (1), $P_0$ denoting the target received power per PRB at the serving cell's base station 312-1. In some embodiments the varied uplink power control parameter 422 may be signaled to users (UEs) associated with the first cell 310-1 in order to iteratively control the transmit power of one or more physical uplink channels, as for example the Physical Uplink Shared Channel (PUSCH) and/or the Physical Uplink Control Channel (PUCCH).

The act 420 of varying the uplink power control parameter 422 may be interpreted as a gradient descent/ascent method for finding a local or global maximum of the first performance 412 or the first figure of merit $FOM_1$ as its indicator. If a variation of the uplink power control parameter 422, e.g. $P_0$, results in a smaller first figure of merit $FOM_1$ in the next iteration of method 400, this indicates that the uplink power control parameter 422 has been varied in the wrong direction in the previous iteration. In order to allow for a stable and/or converging gradient method, varying 420 the uplink power control parameter 422 may comprise, in a current iteration of the power control method, increasing or decreasing the uplink power control parameter 422 by only a limited step size. In some embodiments said limited step size may be $\pm 1$ dB or $\pm 2$ dB for $P_0$, for example. The smaller the step-size, the less oscillations of the system around a maximum of the first and/or second performance indicator may be expected. A larger the step-size, on the other hand, allows a faster approach of the maximum of the first and/or second performance indicator.

As there are various possibilities to define the performance quantities 428 related to one or more cells 310-2 to 310-7 adjacent to the first cell 310-1, the skilled person will understand that in general there are many possibilities to define the corresponding second performance 432. In some embodiments the performance quantities 428 of one or more cells 310-2 to 310-7 adjacent to the first cell 310-1 may be subdivided into a performance of a cell-edge or worst user (UE) of at least one adjacent cell 310-2 to 310-7 and an average performance of the at least one adjacent cell 310-2 to 310-7. Thereby, actual achieved data rates or spectral efficiencies may be regarded as a measure of performance in some embodiments. In an example embodiment, the act 430 of determining the second performance 432 in a current iteration of the method 400 may include determining at least one first value $CE_i$ ($i = 2, ..., 7$) indicative of a cell-edge data throughput of a cell-edge user associated with at least one adjacent cell 310-2 to 310-7. In some embodiments this may be a worst data throughput of a worst user associated with the at least one adjacent cell 310-2 to 310-7. Thereby the cell-edge or worst data throughput may be determined or measured since a previous iteration of the method 400. Further, the act 430 of determining the second performance indicator 432 in a current iteration of the method 400 may include determining at least one second value $C_i$ ($i = 2, ..., 7$). The at least one second value $C_i$ may be indicative of the at least one adjacent cell's overall or average data throughput since the previous iteration. Then, the second performance indicator 432 may be determined based on the at least one first value $CE_i$ ($i = 2, ..., 7$) and the at least one second value $C_i$ ($i = 2, ..., 7$).

The second performance 432 may also be expressed in terms of a second figure of merit $FOM_2$. For example, according to some embodiments the second performance indicator 432 may be determined corresponding to

$$FOM_2 = \sqrt[2N]{\prod_i CE_i \times C_i}\ with\ CE_i \times C_i > 0, \qquad (3)$$

wherein $CE_i$ denotes the $i$-th adjacent cell's cell-edge or worst user's data throughput measured since the previous iteration, and $C_i$ denotes $i$-th adjacent cell's data throughput measured since the previous iteration, and N denotes the number cells with $CE_i \cdot C_i > 0$

In some embodiments the target interference level 442 to be varied or changed for maximizing $FOM_2$ may be

indicative of a target Interference over Thermal (IoT) value. Said target IoT value may be a system-wide target IoT value, which is valid for one, a set or even all cells of the cellular communication system 300.

Again, the act 440 of varying the uplink target interference level 442 may be interpreted as gradient descent/ascent method for finding a local or global maximum of the second performance 432 or the second figure of merit $FOM_2$. If varying the uplink target interference level 442, e.g. IoT, results in a smaller second figure of merit $FOM_2$ in the next iteration of method 400, this indicates that the uplink target interference level 442 has been varied in a wrong direction in the iteration before. In order to allow for a stable and/or converging gradient method, varying 440 the uplink target interference level 442 may comprise, in a current iteration of the power control method 400, increasing or decreasing the uplink target interference level 442 by only a limited step size. In some embodiments said limited step size may be $\pm 1$ dB or $\pm 2$ dB for target IoT, for example. The smaller the step-size, the less oscillations of the system around a maximum of the first and/or second performance indicator may be expected. A larger the step-size, on the other hand, may allow for a faster approach of the maximum of the first and/or second performance indicator.

The self-optimizing power control concept according embodiments may complement the reference power control mechanism by a target interference level 442 (target IoT) and uplink power control parameter 422 ($P_0$) optimization component. Thereby the optimization of the target interference level 442 (target IoT) and the uplink power control parameter 422 ($P_0$) may be performed periodically and unsynchronized between different cells. Hence, the first cell 310-1 may perform an iteration of the method 400 at a different time instant than a second cell 310-2 to 310-7. There may be a temporal offset between different cells. This temporal offset may be achieved by employing different periodicities between different cells. One could choose the different periodicities such that the relation resembles a relation of possibly large prime numbers. This may effectively avoid that neighboring cells synchronously perform a parameter update in the same direction. In some embodiments an update period for updating the target interference level 442 (target IoT) and/or the uplink power control parameter 422 ($P_0$) may be chosen large compared to the IoT control update period. For example, the update period for updating the target interference level 442 (target IoT) and/or the uplink power control parameter 422 ($P_0$) may be 5 times larger than the IoT control loop, that regulates the cell $P_0$ parameter in such a form that a desired or allowed interference level in a neighbor cell is achieved Embodiments of the self-optimizing power control concept or method 400 may be based on periodic exchange of performance-indicators between neighbor cells, for example, the measured cell throughput $C_i$ ($i$ = 1, ..., 7) and the throughput of the worst mobile in a cell $CE_i$ ($i$ = 1, ..., 7). For that purpose the different cells 310-1 to 310-7 or their base stations 312-1 to 312-7 may be interconnected via an inter-cell interface, such as the X2-interface or the like.

The target interference level 442 (target IoT) and the uplink power control parameter 422 ($P_0$) may be adapted using a statistical analysis that relates the performance figures $FOM_1$ and/or $FOM_2$ with measured IoT and used $P_0$ values in the past. In embodiments the target interference level 442 (target IoT) and the uplink power control parameter 422 ($P_0$) for a specific cell may be updated at the same time, for example, in the same iteration. However, a change of the uplink power control parameter 422 ($P_0$) depends also on how we change the target interference level 442 (target IoT) for said cell, which may hence be understood as a conditional change. For example if we decide to increase the target IoT we do not simultaneously decrease the $P_0$ parameter for the same cell in order to avoid a risk for a strong Signal-to-Interference-plus-Noise Ratio (SINR) degradation. Hence, varying 440 the target interference level 442 (target IoT) may exclude decreasing the uplink power control parameter 422 ($P_0$) for the same cell in a current iteration of the power control method 400, if the target interference level 442 (target IoT) is increased in the current iteration.

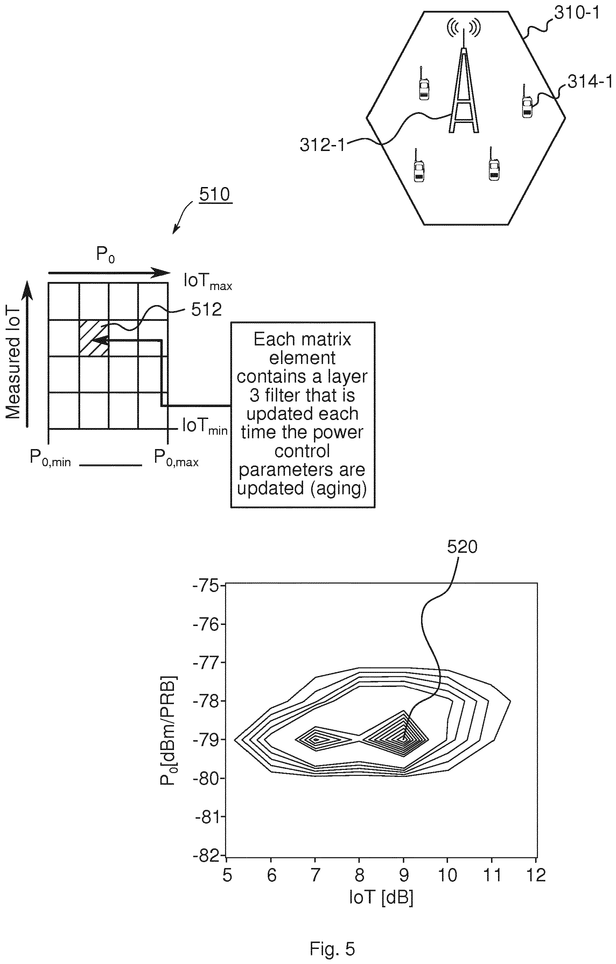

Turning now to Fig. 5, example embodiments of acts 410 and 420 will be described in more detail. The acts 410 and 420 may be regarded as a selfish control of own-cell performance in some embodiments. Here, the first cell 310-1 (for example) tries to maximize its figure of merit $FOM_1$ by varying the $P_0$ parameter for the first cell 310-1. By controlling the received power-spectral density $P_0$ in a cell, the performance in terms of data throughput of that cell may be controlled. For a current iteration of acts 410 and 420, i.e. on a current power-control parameter update event, the following may be performed:

- determine/measure the average IoT since the last update event,
- determine the first performance indicator $FOM_1$ of own cell according to equation (2) or (2'),
- together with the last $P_0$ value update a performance monitoring statistics (2D statistics matrix 510),
- determine a new (current) $P_0$ from the performance statistics - the $P_0$ that probably achieves best performance until a new (next) $P_0$ is determined.

Thereby, the statistics matrix 510 comprises $M$ x $N$ entries, with $M$ denoting a number of possible $P_0$ values, and $N$ denoting a number of possible IoT values. For each pair of measured IoT value and $P_0$ value resulting from the last iteration a $FOM_1$ value may be computed and associated with a corresponding matrix memory location 512. Thereby each $FOM_1$ matrix entry may be determined via a layer 3 filter that is updated each time the power control parameters are updated (aging). In Fig. 5 reference numeral 520 denotes an example of a $P_0$ versus IoT matrix having a $FOM_1$ maximum for a pair of IoT = 9 dB and $P_0$ = 79 dBm/PRB.

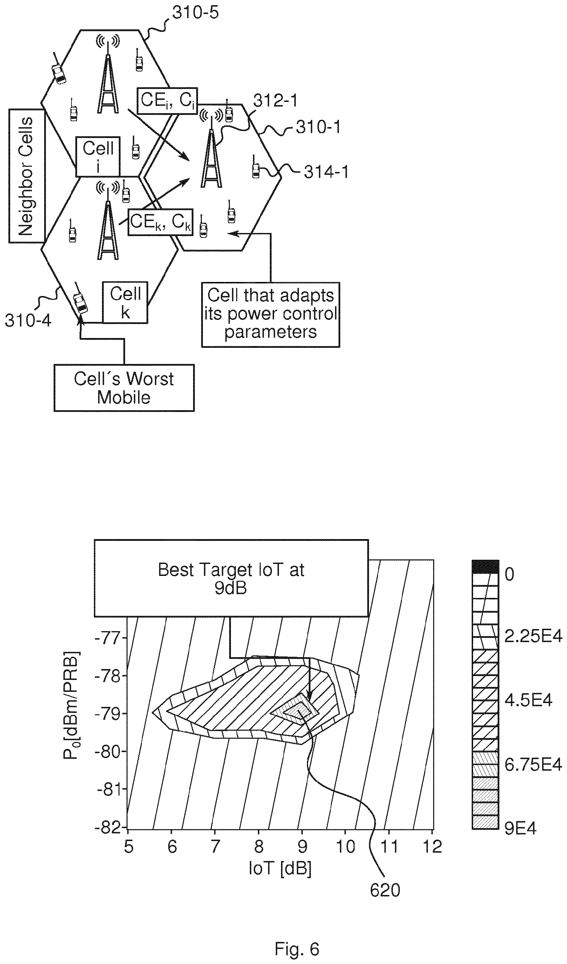

Turning now to Fig. 6, example embodiments of acts 430 and 440 will be described in more detail. The acts 430 and 440 may be regarded as an unselfish control of neighbor cell performance in some embodiments. Here, the first cell 310-1 (for example) tries to maximize the figure of merit $FOM_2$ by varying the target IoT parameter. By adjusting the allowed average IoT in a cell the signal power in neighbor cells and thus their cell capacities may be controlled. For a current iteration of acts 430 and 440, i.e. on a current target interference level update event, the following may be performed:

- determine/measure the average IoT since the last update event,
- determine the second performance indicator $FOM_2$ of own cell according to equation (3),
- together with the last $P_0$ value update a performance monitoring statistics (2D statistics matrix 510),
- determine a new (current) target IoT from the performance statistics - the IoT that probably achieves best performance until a new (next) target IoT is determined

In Fig. 6 reference numeral 620 denotes an example of a $P_0$ versus IoT matrix having a $FOM_2$ maximum for a pair of IoT = 9 dB and $P_0$ = 79 dBm/PRB.

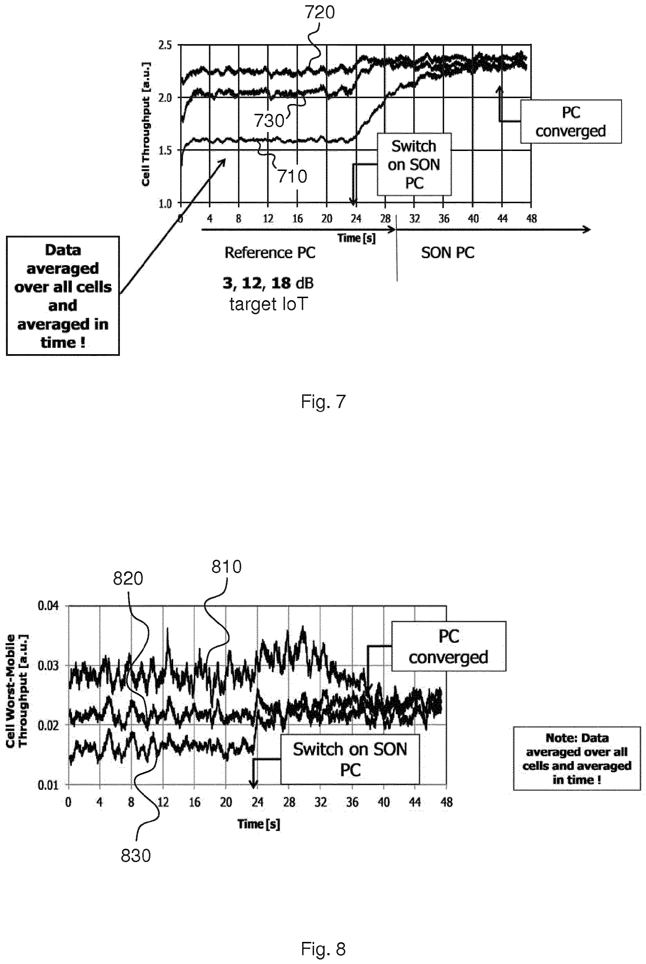

The graph of Fig. 7 shows an example of a temporal cell throughput evolution. In the first 24 seconds the reference power control implementation is employed with different target IoT's (3 dB, 12 dB, and 18 dB). Curve 710 denotes a target IoT of 3 dB. Curve 720 denotes a target IoT of 12 dB. Curve 730 denotes a target IoT of 18 dB. At 24 seconds the self-optimizing power control implementation according to an embodiment is switched on. It is observed that, independent of the initial state, the cell performance converges to the same value. This is achieved after 44 sec, i.e. approximately 20 sec after the self-optimizing power control implementation has been switched on.

The diagram of Fig. 8 shows, for three different start conditions, an example evolution of the cell's worst mobile throughput. Curve 810 denotes a target IoT of 3 dB. Curve 820 denotes a target IoT of 12 dB. Curve 830 denotes a target IoT of 18 dB. We observe that after the self-optimizing power control implementation has been switched on, the worst mobiles performance converge towards the same figures. Depending on the initial target IoT we observe the following behavior:

- 3 dB IoT: Too small in respect to cell performance. Self-optimizing power control increases signal power in the system and thus worst mobile performance is somewhat reduced.
- 12 dB IoT: Close to optimum and thus almost no changes with activated self-optimizing power control
- 18 dB IoT: Initially too high. Self-optimizing power control implementation reduces interference and thus improves the worst mobiles performance

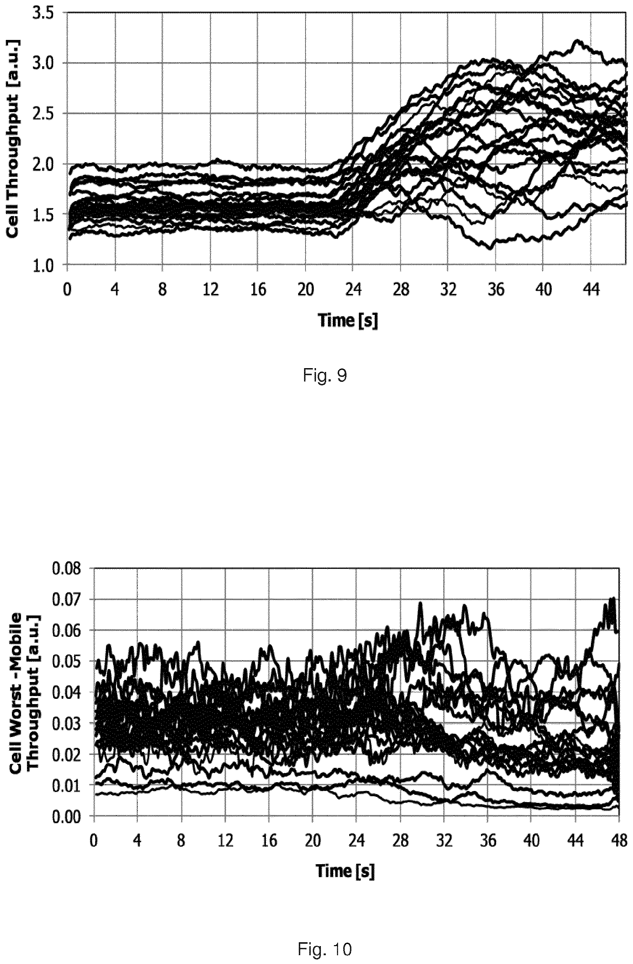

Fig. 9 shows an example of a temporal evolution of each cell's performance (averaged in time). The different curves represent different cells. With the reference power control we observe that the performance is almost constant in time (Target IoT is 3dB). With an embodiment of the self-optimizing power control switched on we observe that each cell's performance is gradually improved. Fig. 10 shows the temporal evolution of each cell's worst mobile performance (averaged in time).

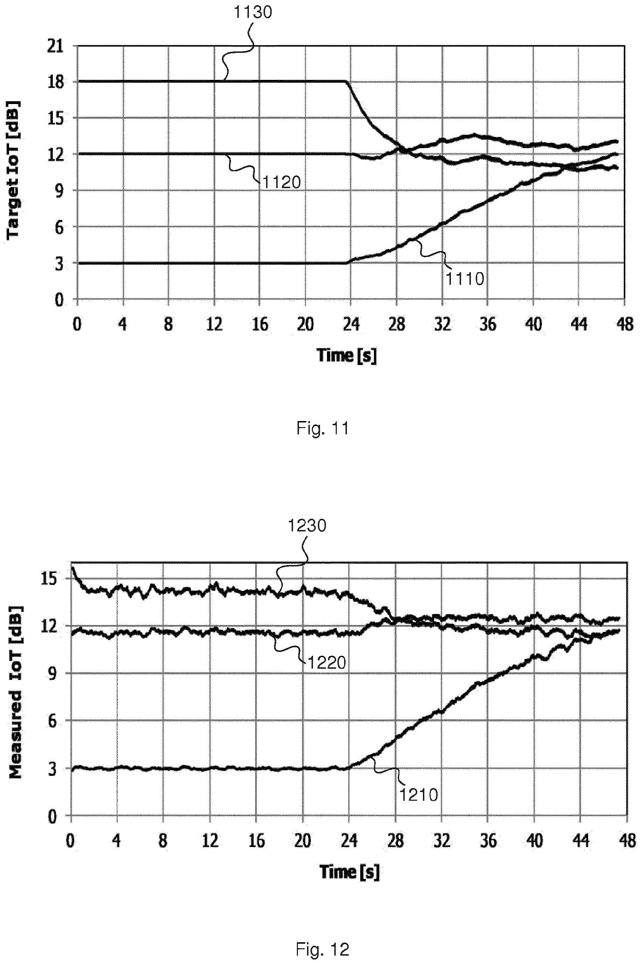

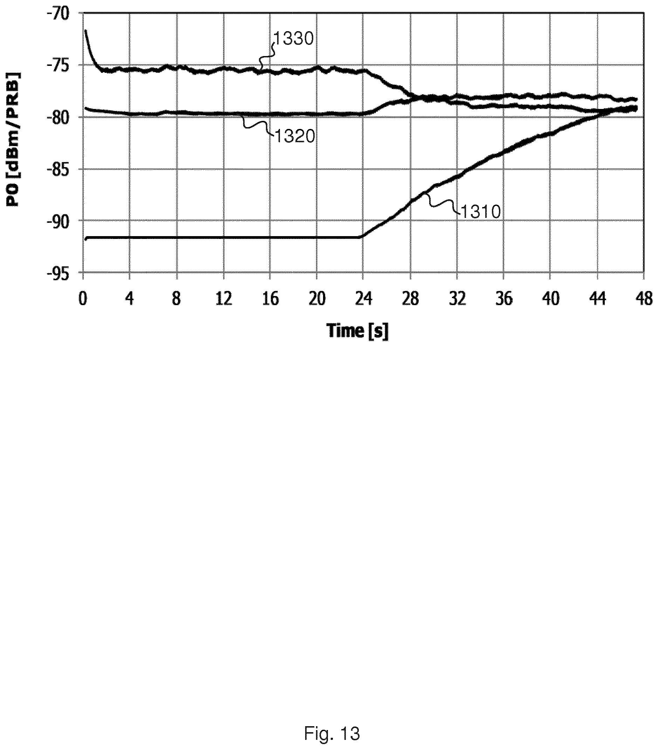

Fig. 11 shows an example targeted IoT figure as function of time. Curve 1110 denotes a target IoT of 3 dB. Curve 1120 denotes a target IoT of 12 dB. Curve 1130 denotes a target IoT of 18 dB. Fig. 12 shows the temporal evolution of the measured IoT. Curve 1210 denotes a target IoT of 3 dB. Curve 1220 denotes a target IoT of 12 dB. Curve 1230 denotes a target IoT of 18 dB. We observe that approximately 20 seconds after the self-optimizing power control has been switched on the target and measured IoT converges - independent on the start conditions. Fig. 13 shows the evolution of the target power-spectral density $P_0$. Curve 1310 denotes a target IoT of 3 dB. Curve 1320 denotes a target IoT of 12 dB. Curve 1330 denotes a target IoT of 18 dB. As before we observe convergence after approximately 20 seconds after the self-optimizing power control has been switched on.

Irrespective of the initial power control parameters ($P_0$ and target IoT) the performance and the parameters converge towards the same values. For a specific exemplary scenario system simulations utilizing embodiments of the self-optimizing power control show convergence against the following performance and power control figures:

- Cell spectral efficiency : 1.5 bit/s/Hz
- Cell-edge spectral efficiency : 0.02 bit/s/Hz
- Target IoT : 12 dB
- P0 : -78 dBm/PRB

Compared to the reference power control results at the same target IoT embodiments achieved almost exactly the same performance results. In contrast to the reference cases, however, the power control parameters were found automatically, i.e., without a time consuming trail-and-error approach.

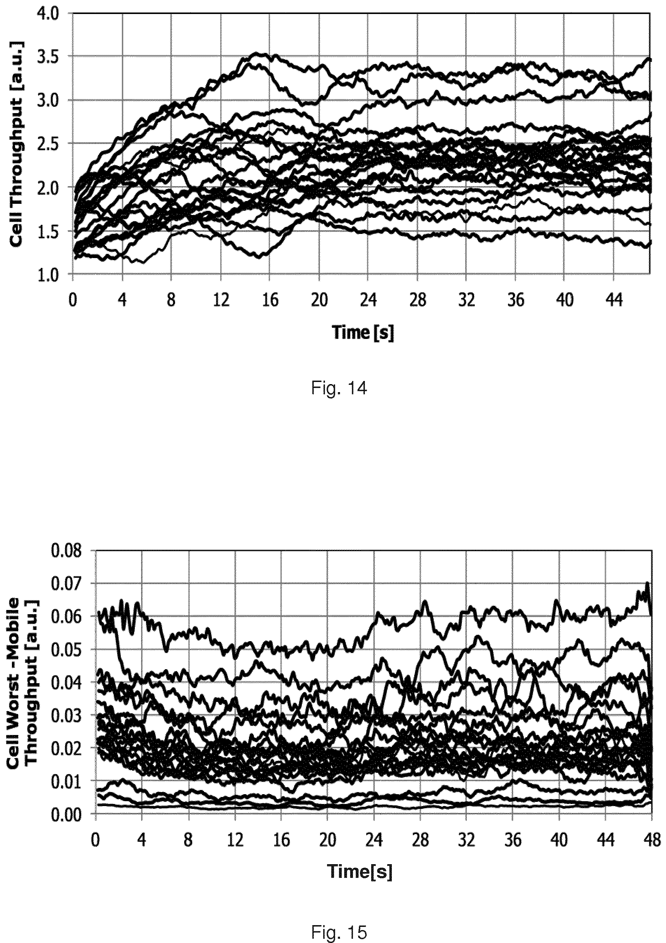

Fig. 14 shows an example of a temporal evolution of each cell's performance (averaged in time) with an embodiment of self-optimizing power control switched on from the beginning. The system has been started with non-optimized power control parameters. The system achieves a stable, optimized configuration after approximately 24 seconds. All cells improved their performance. Fig. 15 shows the temporal evolution of each cell's worst mobile performance.

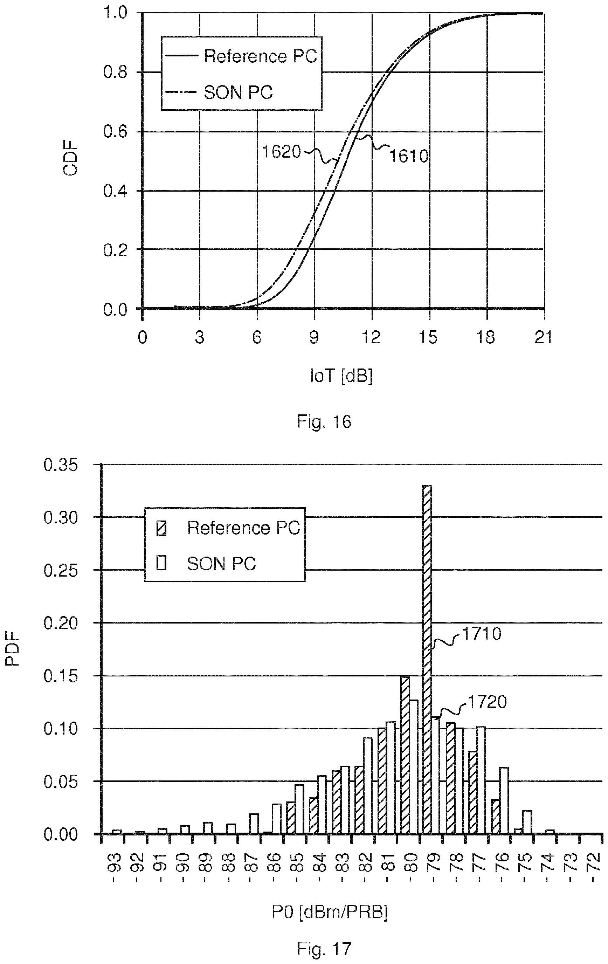

Fig. 16 shows an example of a measured IOT distribution for both the reference power control 1610 and an embodiment of self-optimizing power control 1620. The target IoT in the reference power control case was 12 dB, a value, which has been identified close to optimum from a brute-force search. It is observed that the IoT distribution under self-optimizing power control is very similar to the reference case. Fig. 17 shows examples of target received power spectral density distributions ($P_0$). The reference power control 1710 shows - as expected - a narrower $P_0$ distribution. The embodiment of self-optimizing power control 1720 shows a longer tails towards small and large $P_0$ values.

To summarize, embodiments introduce a concept that automatically determines optimum power control parameter values. The proposed concept uses an exchange of key-performance indicators, like the cell-edge user and cell throughput and statistical evaluation, to set new receive-power spectral densities ($P_0$) and/or target interference-over-thermal (IoT) values. It has been shown that the proposed concept may always find - irrespective of the initial power control sate - an optimum set of power control parameters. Embodiments may be surprisingly fast compared to manual trial-and-error approach usually employed in conventional wireless networks.

Functional blocks shall be understood as functional blocks comprising circuitry that is adapted for performing a certain function, respectively. Hence, a "means for s.th." may as well be understood as a "means being adapted or suited for s.th.". A means being adapted for performing a certain function does, hence, not imply that such means necessarily is performing said function (at a given time instant).

Functions of various elements shown in the figures, including any functional blocks may be provided through the use of dedicated hardware, such as "a processor", "a controller", etc. as well as hardware capable of executing software in association with appropriate software. Moreover, any entity described herein as functional block, may correspond to or be implemented as "one or more modules", "one or more devices", "one or more units", etc. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Furthermore, the following claims are hereby incorporated into the Detailed Description, where each claim may stand on its own as a separate embodiment. While each claim may stand on its own as a separate embodiment, it is to be noted that - although a dependent claim may refer in the claims to a specific combination with one or more other claims - other embodiments may also include a combination of the dependent claim with the subject matter of each other dependent claim. Such combinations are proposed herein unless it is stated that a specific combination is not intended. Furthermore, it is intended to include also features of a claim to any other independent claim even if this claim is not directly made dependent to the independent claim.

It is further to be noted that methods disclosed in the specification or in the claims may be implemented by a device having means for performing each of the respective steps of these methods.

Further, it is to be understood that the disclosure of multiple steps or functions disclosed in the specification or claims may not be construed as to be within the specific order. Therefore, the disclosure of multiple steps or functions will not limit these to a particular order unless such steps or functions are not interchangeable for technical reasons. Furthermore, in some embodiments a single step may include or may be broken into multiple sub steps. Such sub steps may be included and part of the disclosure of this single step unless explicitly excluded.

**Claims**

1. A power control method (400) for a cellular communication system (300), wherein the power control method (400) is performed periodically and unsynchronized between different cells of the cellular communication system (300), the method (400) comprising:

determining (410), at a cell (310-1), a first performance (412; $FOM_1$) of the cell (310-1);
varying (420), at the cell (310-1), an uplink power control parameter (422; $P_0$) for the cell to maximize the first performance (412);
determining (430), at the cell (310-1), a second performance (432, $FOM_2$) of one or more cells (310-2) adjacent to the cell (310-1); and
varying (440), at the cell (310-1), a target interference level (442; IoT) to maximize the second performance.

2. The method (400) of claim 1, wherein the method comprises a plurality of iterations, wherein determining (410) the first performance (412) in a current iteration comprises

   determining a first value (CE) indicative of a data throughput of a cell-edge user associated with the cell (310-1) since a previous iteration;
   determining a second value (C) indicative of the cell's data throughput since the previous iteration; and
   determining the first performance (412) based on the first value (CE) and the second value (C).

3. The method (400) of claim 2, wherein the first performance (412) is determined corresponding to

$$FOM_1 = \sqrt{CE \times C} \ with \ CE \times C > 0,$$

   wherein $CE$ denotes the cell's cell-edge user's data throughput measured since the previous iteration, and $C$ denotes cell's data throughput measured since the previous iteration.

4. The method (400) of claim 1, wherein the uplink power control parameter (422; $P_0$) is a value indicative of a target received power at the cell's base station (312-1).

5. The method (400) of claim 4, wherein the uplink power control parameter (422; $P_0$) is signaled to users (314-1) associated with the cell (310-1) and denotes a target receive power spectral density per physical resource block.

6. The method (400) of claim 1, wherein varying the uplink power control parameter (422; $P_0$) comprises, in a current iteration of the power control method (400), increasing or decreasing the uplink power control parameter (422; $P_0$) by a limited step size.

7. The method (400) of claim 1, wherein the method comprises a plurality of iterations, wherein determining the second performance (432, $FOM_2$) in a current iteration comprises

   determining at least one first value ($CE_i$) indicative of a data throughput of a cell-edge user associated with at least one adjacent cell (310-2) since a previous iteration;
   determining at least one second value ($C_i$) indicative of the at least one adjacent cell's (310-2) data throughput since the previous iteration; and
   determining the second performance (432, $FOM_2$) based on the at least one first value ($CE_i$) and the at least one second value ($C_i$).

8. The method (400) of claim 7, wherein the second performance (432, $FOM_2$) is determined corresponding to

$$FOM_2 = \sqrt[2N]{\prod_i CE_i \times C_i} \ with \ CE_i \times C_i > 0,$$

   wherein $CE_i$ denotes the $i$-th adjacent cell's cell-edge user's data throughput measured since the previous iteration, and $C_i$ denotes $i$-th adjacent cell's data throughput measured since the previous iteration.

9. The method (400) of claim 1, wherein the target interference level (442) is indicative of a target Interference over Thermal, "IoT", value.

10. The method (400) of claim 1, wherein varying the target interference level (442; IoT) comprises, in a current iteration of the power control method, increasing or decreasing the target interference level (442; IoT) by a limited step size.

11. The method (400) of claim 1, wherein varying the target interference level (442; IoT) excludes decreasing the uplink power control parameter (422; $P_0$) in a current iteration of the power control method, if the target interference level is increased in the current iteration.

12. The method (400) of claim 1, wherein the cell (310-1) performs an iteration of the method at a different time instant than a second cell (310-2).

13. The method (400) of claim 1, wherein the cellular communication system (300) is based on Orthogonal Frequency-Division Multiple Access, OFDMA, and/or Single Carrier Frequency-Division Multiple Access, SC-FDMA.

14. A computer program having a program code for performing the method (400) of claim 1, when the computer program is executed on a programmable hardware device.

15. A power control apparatus for periodical and unsynchronized power control between different cells of a cellular communication system (300), the apparatus comprising:

> a processor configured to determine, at a cell (310-1), a first performance (412; $FOM_1$) of the cell (310-1);
> a processor configured to vary, at the cell (310-1), an uplink power control parameter (422; $P_0$) for the cell to maximize the first performance (412; $FOM_1$);
> a processor configured to determine, at the cell (310-1), a second performance (432, $FOM_2$) of one or more cells (310-2) adjacent to the cell (310-1); and
> a processor configured to vary, at the cell (310-1), a target interference level (442; IoT) to maximize the second performance (432, $FOM_2$).

**Patentansprüche**

1. Verfahren zur Sendeleistungseinstellung (400) für ein zellulares Kommunikationssystem (300), wobei das Verfahren zur Sendeleistungseinstellung (400) periodisch und unsynchronisiert zwischen verschiedenen Zellen des zellularen Kommunikationssystems (300) durchgeführt wird, wobei das Verfahren (400) Folgendes umfasst:

> Bestimmen (410), an einer Zelle (310-1), einer ersten Leistung (412; $FOM_1$) der Zelle (310-1);
> Ändern (420), an der Zelle (310-1), eines Parameters zur Sendeleistungseinstellung in Aufwärtsrichtung (422; $P_0$) für die Zelle, um die erste Leistung (412) zu maximieren;
> Bestimmen (430), an der Zelle (310-1), einer zweiten Leistung (432, $FORM_2$) der einen oder mehreren Zellen (310-2) neben der Zelle (310-1); und
> Ändern (440), an der Zelle (310-1), eines Zielstörpegels (442; IoT), um die zweite Leistung zu maximieren.

2. Verfahren (400) nach Anspruch 1, wobei das Verfahren eine Vielzahl von Iterationen umfasst, wobei das Bestimmen (410) der ersten Leistung (412) in einer aktuellen Iteration Folgendes umfasst:

> Bestimmen eines ersten Werts (CE), der bezeichnend ist für einen Datendurchsatz eines zellenseitigen Benutzers, der der Zelle (310-1) seit einer vorherigen Iteration zugeordnet ist;
> Bestimmen eines zweiten Werts (C), der bezeichnend ist für den Datendurchsatz der Zelle seit der vorherigen Iteration; und
> Bestimmen der ersten Leistung (412) basierend auf dem ersten Wert (CE) und dem zweiten Wert (C).

3. Verfahren (400) nach Anspruch 2, wobei die erste Leistung (412) bestimmt wird gemäß

$$FOM_1 = \sqrt{CE \; x \; C} \text{ mit CE x C} > 0,$$

wobei *CE* den Datendurchsatz des zellenseitigen Benutzers der Zelle bezeichnet, der seit der vorherigen Iteration gemessen wurde, und *C* den Datendurchsatz der Zelle bezeichnet, der seit der vorherigen Iteration gemessen wurde.

4. Verfahren (400) nach Anspruch 1, wobei der Parameter zur Sendeleistungseinstellung in Aufwärtsrichtung (422; $P_0$) ein Wert ist, der bezeichnend ist für eine Zielempfangsleistung an der Basisstation (312-1) der Zelle.

5. Verfahren (400) nach Anspruch 4, wobei der Parameter zur Sendeleistungseinstellung in Aufwärtsrichtung (422; $P_0$) Benutzern (314-1) gemeldet wird, die der Zelle (310-1) zugeordnet sind, und eine spektrale Empfangsleistungsdichte pro physikalischem Ressourcenblock bezeichnet.

6. Verfahren (400) nach Anspruch 1, wobei das Ändern des Parameters zur Sendeleistungseinstellung in Aufwärtsrichtung (422; $P_0$) in einer aktuellen Iteration des Verfahrens (400) zur Sendeleistungseinstellung das Erhöhen oder Verringern des Parameters zur Sendeleistungseinstellung in Aufwärtsrichtung (422; $P_0$) um eine begrenzte Schrittgröße umfasst.

7. Verfahren (400) nach Anspruch 1, wobei das Verfahren eine Vielzahl von Iterationen umfasst, wobei das Bestimmen der zweiten Leistung (432, $FOM_2$) in einer aktuellen Iteration Folgendes umfasst:

Bestimmen mindestens eines ersten Werts ($CE_i$), der bezeichnend ist für einen Datendurchsatz eines zellenseitigen Benutzers, der mindestens einer benachbarten Zelle (310-2) seit einer vorherigen Iteration zugeordnet ist;
Bestimmen mindestens eines zweiten Werts ($C_i$), der bezeichnend ist für den Datendurchsatz der mindestens einen benachbarten Zelle (310-2) seit der vorherigen Iteration; und
Bestimmen der zweiten Leistung (432, $FOM_2$) basierend auf dem mindestens einen ersten Wert ($CE_i$) und dem mindestens einen zweiten Wert ($C_i$).

8. Verfahren (400) nach Anspruch 7, wobei die zweite Leistung (432, $FOM_2$) bestimmt wird gemäß

$$FOM_2 = \sqrt[2N]{\Pi_i CE_i \times C_i} \text{ mit } CE_i \times C_i > 0,$$

wobei $CE_i$ den Datendurchsatz des zellenseitigen Benutzers der $i$. benachbarten Zelle bezeichnet, der seit der vorherigen Iteration gemessen wurde, und $C_i$ den Datendurchsatz der $i$. benachbarten Zelle bezeichnet, der seit der vorherigen Iteration gemessen wurde.

9. Verfahren (400) nach Anspruch 1, wobei der Zielstörpegel (442) bezeichnend ist für einen Interference-over-Thermal-"IoT"-Zielwert.

10. Verfahren (400) nach Anspruch 1, wobei das Ändern des Zielstörpegels (442; IoT) in einer aktuellen Iteration des Verfahrens zur Sendeleistungseinstellung das Erhöhen oder Verringern des Zielstörpegels (442; IoT) um eine begrenzte Schrittgröße umfasst.

11. Verfahren (400) nach Anspruch 1, wobei das Ändern des Zielstörpegels (442; IoT) das Verringern des Parameters zur Sendeleistungseinstellung in Aufwärtsrichtung (422; $P_0$) in einer aktuellen Iteration des Verfahrens zur Sendeleistungseinstellung ausschließt, wenn der Zielstörpegel in der aktuellen Iteration erhöht wird.

12. Verfahren (400) nach Anspruch 1, wobei die Zelle (310-1) eine Iteration des Verfahrens zu einem anderen Zeitpunkt durchführt als eine zweite Zelle (310-2).

13. Verfahren (400) nach Anspruch 1, wobei das zellulare Kommunikationssystem (300) auf einem orthogonalen Frequenzmultiplex-Zugangsverfahren, OFDMA, und/oder Single-Carrier-Frequenzmultiplex-Zugangsverfahren, SC-FDMA, basiert.

14. Computerprogramm mit einem Programmcode zum Durchführen des Verfahrens (400) nach Anspruch 1, wenn das Computerprogramm auf einer programmierbaren Hardware-Vorrichtung ausgeführt wird.

15. Gerät zur Sendeleistungseinstellung für periodische und unsynchronisierte Sendeleistungseinstellung zwischen verschiedenen Zellen eines zellularen Kommunikationssystems (300), wobei das Gerät Folgendes umfasst:

einen Prozessor, der ausgelegt ist zum Bestimmen, an einer Zelle (310-1), einer ersten Leistung (412; $FOM_1$) der Zelle (310-1);
einen Prozessor, der ausgelegt ist zum Ändern, an der Zelle (310-1), eines Parameters zur Sendeleistungseinstellung in Aufwärtsrichtung (422; $P_0$) für die Zelle, um die erste Leistung (412; $FOM_1$) zu maximieren;

einen Prozessor, der ausgelegt ist zum Bestimmen, an der Zelle (310-1), einer zweiten Leistung (432, $FOM_2$) der einen oder mehreren Zellen (310-2) neben der Zelle (310-1); und

einen Prozessor, der ausgelegt ist zum Ändern, an der Zelle (310-1), eines Zielstörpegels (442; IoT), um die zweite Leistung (432, $FOM_2$) zu maximieren.

**Revendications**

1. Procédé de commande de puissance (400) pour un système de communication cellulaire (300), le procédé de commande de puissance (400) étant effectué périodiquement et non synchronisé entre différentes cellules du système de communication cellulaire (300), le procédé (400) comprenant les étapes suivantes :

   déterminer (410), au niveau d'une cellule (310-1), une première performance (412 ; $FOM_1$) de la cellule (310-1) ;
   faire varier (420), au niveau de la cellule (310-1), un paramètre de commande de puissance de liaison montante (422 ; $P_0$) pour la cellule pour maximiser la première performance (412) ;
   déterminer (430), au niveau de la cellule (310-1), une seconde performance (432, $FOM_2$) d'une ou plusieurs cellules (310-2) adjacentes à la cellule (310-1) ; et
   faire varier (440), au niveau de la cellule (310-1), un niveau d'interférence cible (442 ; IoT) pour maximiser la seconde performance.

2. Procédé (400) selon la revendication 1, le procédé comprenant une pluralité d'itérations, dans lequel la détermination (410) de la première performance (412) dans une itération actuelle comprend les étapes suivantes :

   déterminer une première valeur (CE) indicative d'un débit de données d'un utilisateur de bord de cellule associé à la cellule (310-1) depuis une itération précédente ;
   déterminer une seconde valeur (C) indicative du débit de données de la cellule depuis l'itération précédente ; et
   déterminer la première performance (412) sur la base de la première valeur (CE) et de la seconde valeur (C).

3. Procédé (400) selon la revendication 2, dans lequel la première performance (412) est déterminée selon

$$FOM_1 = \sqrt{CE \times C} \text{ avec } CE \times C > 0,$$

   où *CE* désigne le débit de données de l'utilisateur de bord de cellule de la cellule mesuré depuis l'itération précédente, et *C* désigne le débit de données de la cellule mesuré depuis l'itération précédente.

4. Procédé (400) selon la revendication 1, dans lequel le paramètre de commande de puissance de liaison montante (422 ; $P_0$) est une valeur indicative d'une puissance reçue cible au niveau de la station de base de la cellule (312-1).

5. Procédé (400) selon la revendication 4, dans lequel le paramètre de commande de puissance de liaison montante (422; $P_0$) est signalé à des utilisateurs (314-1) associés à la cellule (310-1) et désigne une densité spectrale de puissance de réception cible par bloc de ressource physique.

6. Procédé (400) selon la revendication 1, dans lequel la variation du paramètre de commande de puissance de liaison montante (422 ; $P_0$) comprend, dans une itération actuelle du procédé de commande de puissance (400), l'augmentation ou la diminution du paramètre de commande de puissance de liaison montante (422 ; $P_0$) d'une taille de pas limitée.

7. Procédé (400) selon la revendication 1, le procédé comprenant une pluralité d'itérations, dans lequel la détermination de la seconde performance (432, $FOM_2$) dans une itération actuelle comprend les étapes suivantes :

   déterminer au moins une première valeur ($CE_i$) indicative d'un débit de données d'un utilisateur de bord de cellule associé à au moins une cellule adjacente (310-2) depuis une itération précédente ;
   déterminer au moins une seconde valeur ($C_i$) indicative du débit de données de la au moins une cellule adjacente (310-2) depuis l'itération précédente ; et
   déterminer la seconde performance (432, $FOM_2$) sur la base de la au moins une première valeur ($CE_i$) et de la au moins une seconde valeur ($C_i$).

EP 2 863 688 B1

**8.** Procédé (400) selon la revendication 7, dans lequel la seconde performance (432, $FOM_2$) est déterminée selon

$$FOM_2 = \sqrt[2N]{\prod_i CE_i \times C_i} \; avec \; CE_i \times C_i > 0,$$

où $CE_i$ désigne le débit de données de l'utilisateur de bord de cellule de la $i$-ème cellule adjacente mesuré depuis l'itération précédente, et $C_i$ désigne le débit de données de la $i$-ème cellule adjacente mesuré depuis l'itération précédente.

**9.** Procédé (400) selon la revendication 1, dans lequel le niveau d'interférence cible (442) est indicatif d'une valeur Interférence sur Thermique, « IoT », cible.

**10.** Procédé (400) selon la revendication 1, dans lequel la variation du niveau d'interférence cible (442 ; IoT) comprend, dans une itération actuelle du procédé de commande de puissance, l'augmentation ou la diminution du niveau d'interférence cible (442 ; IoT) d'une taille de pas limitée.

**11.** Procédé (400) selon la revendication 1, dans lequel la variation du niveau d'interférence cible (442 ; IoT) exclut la diminution du paramètre de commande de puissance de liaison montante (422 ; $P_0$) dans une itération actuelle du procédé de commande de puissance, si le niveau d'interférence cible est augmenté dans l'itération actuelle.

**12.** Procédé (400) selon la revendication 1, dans lequel la cellule (310-1) effectue une itération du procédé à un instant de temps différent d'une seconde cellule (310-2).

**13.** Procédé (400) selon la revendication 1, dans lequel le système de communication cellulaire (300) est basé sur l'Accès multiple par répartition en fréquence orthogonale, OFDMA, et/ou l'Accès multiple par répartition en fréquence monoporteuse, SC-FDMA.

**14.** Programme informatique ayant un code de programme pour effectuer le procédé (400) selon la revendication 1, lorsque le programme informatique est exécuté sur un dispositif matériel programmable.

**15.** Appareil de commande de puissance pour une commande de puissance périodique et non synchronisée entre différentes cellules d'un système de communication cellulaire (300), l'appareil comprenant :

un processeur configuré pour déterminer, au niveau d'une cellule (310-1), une première performance (412 ; $FOM_1$) de la cellule (310-1) ;
un processeur configuré pour faire varier, au niveau de la cellule (310-1), un paramètre de commande de puissance de liaison montante (422 ; $P_0$) pour la cellule pour maximiser la première performance (412 ; $FOM_1$) ;
un processeur configuré pour déterminer, au niveau de la cellule (310-1), une seconde performance (432, $FOM_2$) d'une ou plusieurs cellules (310-2) adjacentes à la cellule (310-1) ; et
un processeur configuré pour faire varier, au niveau de la cellule (310-1), un niveau d'interférence cible (442 ; IoT) pour maximiser la seconde performance (432, $FOM_2$).

a)

b)

c)

Fig. 1

a)

b)

c)

Fig. 2

300

Fig. 3

Fig. 4

_510_

Each matrix element contains a layer 3 filter that is updated each time the power control parameters are updated (aging)

Fig. 5

Fig. 6

720

730

710

Data
averaged
over all cells
and
averaged in
time !

Switch
on SON
PC

PC
converged

Reference PC

**3, 12, 18** dB
target IoT

SON PC

Fig. 7

820        810

Switch on SON
PC

830

PC
converged

Note: Data
averaged over all
cells and averaged
in time !

Fig. 8

Fig. 9

Fig. 10

Fig. 11

Fig. 12

Fig. 13

Fig. 16

Fig. 17

**EP 2 863 688 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2011136448 A1
- WO 2012071727 A1